Europäisches Patentamt

European Patent Office

Office européen des brevets

(19)

(11) Veröffentlichungsnummer: **0 072 883**
**A1**

(12) # EUROPÄISCHE PATENTANMELDUNG

(21) Anmeldenummer: **81810342.6**

(22) Anmeldetag: **21.08.81**

(51) Int. Cl.³: **C 25 C 1/00**

(43) Veröffentlichungstag der Anmeldung:
**02.03.83 Patentblatt 83/9**

(84) Benannte Vertragsstaaten:
**AT BE DE FR GB IT LU SE**

(71) Anmelder: **NOMETA PATENT- UND
LIZENZVERWERTUNGS-AG
Pilatusstrasse 38
CH-6052 Hergiswil NW(CH)**

(72) Erfinder: **Larrain Orrego, Javier
Mirador Azul No. 224
Santiago de Chile(CL)**

(72) Erfinder: **Narvaez Espinoza, Luis
Mirador Azul No. 224
Santiago de Chile(CL)**

(74) Vertreter: **Reichmuth, Hugo Werner
INVENTIO AG Seestrasse 55
CH-6052 Hergiswil NW(CH)**

(54) **Verfahren zur direkten elektrolytischen Wiederaufbereitung von nicht eisenhaltigen Metallen.**

(57) Die Erfindung ist in das Gebiet des Recyclings von nicht eisenhaltigen Metallen einzuordnen. Sie stellt ein stark vereinfachtes und verbilligtes Verfahren dar, das nur zwei Arbeitsgänge aufweist.

Nach der Auswahl des Schrottes kann sofort zur elektrolytischen Veredelung geschritten werden. Dabei wird ein Ergebnis von 100 %iger Reinheit des aufbereiteten Metalles an den Kathoden erzielt. Als Abfallprodukt entsteht einzig Anoden-Schlamm, jedoch keinerlei Anoden-Rest.

Der Durchbruch zur vorliegenden Erfindung konnte mit der Ersetzung gegossener Anoden durch Anodenträger, welche das Altmetall enthalten, erreicht werden. Diese Anodenträger, sind aus einem dem elektrolytischen Prozess widerstandsfähigen Material herzustellen, das maschinell bearbeitbar, elektrisch leitfähig und von genügender mechanischer Festigkeit ist. Die Anlage muss so beschaffen sein, dass sie einerseits den Kontakt des Anodenträgers mit dem Elektrolyten und andererseits den Durchlass von Anodenschlamm und gelöstem Altmetall gewährt. Ansonsten können alle herkömmlichen Hilfsoperationen der elektrolytischen Veredelung von Metallen auch hier eingesetzt werden.

./...

KONVENTIONELLER PROZESS:

NEUER PROZESS:

**Schrott**

↓

Auswahl → Rückstoss

↓

Pyrometallurgische Prozesse → Metallurgische Verluste

↓

Thermische Veredelung → Metallurgische Verluste

↓

Anoden-Form

100 % Anoden

↓

Elektrolytische Veredelung

15-25 % Anodenreste

↓

75 - 85 %
Kathoden mit hoher Reinheit

**Schrott**

↓

Auswahl → Pb

100 %
Schrott

↓

Elektrolytische Veredelung

↓

100 % Kathoden

Hohe Reinheit

F I G - 1

BESCHREIBUNG DER ERFINDUNG

Verfahren zur direkten elektrolytischen Wiederaufbereitung
von nicht eisenhaltigen Altmetallen

Die vorliegende Erfindung betrifft einen Prozess zur
elektrolytischen Veredelung des Ausschusses, des
Schrottes und des Abfalls von Nicht-Eisen-Metallen, wie
z.B. :

Metallisches Ausschuss- oder Schrott-Material besteht aus
Rückständen oder Abfall in der Fabrikation von Stücken
oder Teilen dieses Metalls, und zwar durch physische ,
chemische und/oder mechanische Prozesse .

Prozesse zur Veredelung solchen Nicht-Eisen-Metalls
mittels aufeinanderfolgenden pyrometallurgischen und
elektrochemischen Vorgängen sind bestens bekannt. Im
allgemeinen sind diese Prozesse dadurch charakterisiert,
dass das Ausschuss-Material geschmolzen und in Oefen
und/oder Birnen behandelt wird, und zwar in einer Stufe oder
mehreren, wobei das geschmolzene Metall gegossen wird
um metallische Elemente in der gewünschten Grösse und
Form herzustellen; d.h. Anoden , die einem elektrolytischen
Veredelungs-Prozess in verschieden-gestalteten Zellen
unterworfen werden, wobei Elektrolyten geeigneter Art
angewendet werden. Die elektrolytische Veredelung
besteht grundlegend darin, dass die Anoden im Elektrolyt
gelöst und gleichzeitig an der Kathode die Ablagerung
des gleichen -jedoch reineren- Metalls bewirkt wird.

Aus betrieblichen und oekonomischen Gründen, kann sich die
metallische Anode nicht vollständig auflösen; am Schluss
der elektrolytischen Veredelung verbleiben normalerweise
zwischen 15 & 25%  des Anoden-Metalls.

Dieser Rest, der " Anoden-Rückstand"   oder " Anoden-Schrott" genannt wird, muss aus den elektrolytischen Zellen entfernt werden, muss gewaschen und eingeschmolzen werden zwecks Neu-Guss
von Anoden zur Wiederaufnahme des Veredelungs-Zyclus.
Kombinierte   pyrometallurgische - elektrolytische
Prozesse zur Veredelung von Ausschuss aus Nicht-Eisen-
Metallen-zwecks Bereitstellung eines Metalls von hoher
Reinheit,   haben die folgenden Nachteile:

- hoher Verbrauch von Brennstoff und elektrischer Energie
  in den primären pyrometallurgischen Prozessen:
  nämlich anlässlich der thermischen Schmelzung und
  Veredelung und beim Vorgang des Anoden-Gusses.

- Zusätzlich hoher Verbrauch von elektrischer Energie
  bei Hilfs-Operationen, wie z.B.  bei der Extraktion
  und Beseitigung von grossen Mengen toxischer Gase,
  welche bei den Operationen entstehen.

- hohe Kapital-Kosten  für die Installationen  zur
  Bewerkstelligung der pyrometallurgischen Prozesse.

- hohe Kosten für die  zugehörige Infrastruktur, die
  durch den industriellen Standard  zur Beseitigung
  von toxischen Gasen & Rauch gefordert sind (die letzteren
  fallen im pyrometallurgischen Prozess an).

- Zusätzliche Kosten aufgrund der Wiederaufbereitung
  von zwischen 15  und 25%  des "Anoden-Schrotts"  in der
  elektrolytischen Veredelung des Metalls ;  der Prozent-
  Satz  des Rest-Anodenmaterials verbleibt in einer
  permanenten Form im Zyklus  von Schmelzung der Anoden-
  Rückständen, Anoden-Guss , elektrolytischer Veredelung
  und  wiederum Schmelzung von Anoden-Rückständen.

Die wichtigste Idee der vorliegenden Erfindung liegt darin,
einen Prozess zur Veredelung von nicht-Eisen Abfallmetallen
einzurichten, wobei diese Metalle einerseits in hoher
Reinheit  anfallen, jedoch andererseits die vorgenannten
Nachteile vermieden werden können.

Das  vorgeschlagene Vorgehen hat den Vorteil einer direkten
Beeinflussung der elektrolytischen Veredelung von nicht-
Eisen Abfallmaterialien, und zwar  mittels der Anwendung
eines leitfähigen jedoch unlöslichen Systems der Anoden-
Träger      mit dem genannten Ausschussmaterial;  dabei,

werden die pyrometallurgischen Operationen und die thermische
Wiederaufbereitung des Anoden-Rückstandes eliminiert - welch
letztere Operationen in der bisherigen elektrolytischen Veredelung noch erforderlich sind.

Der in dieser Erfindung angewendete leitfähige, unlösliche
Anoden-Träger spielt in wesentlicher Funktion die Rolle eines
elektrischen Zwischen-Kontakts zwischen dem in ihm enthaltenen Ausschuss-Material und der äussern Strom-Quelle. In diesem System löst sich so anodisch nur das Ausschuss-Material
während der Elektrolyse, wobei der Anoden-Träger nicht beeinträchtigt wird.

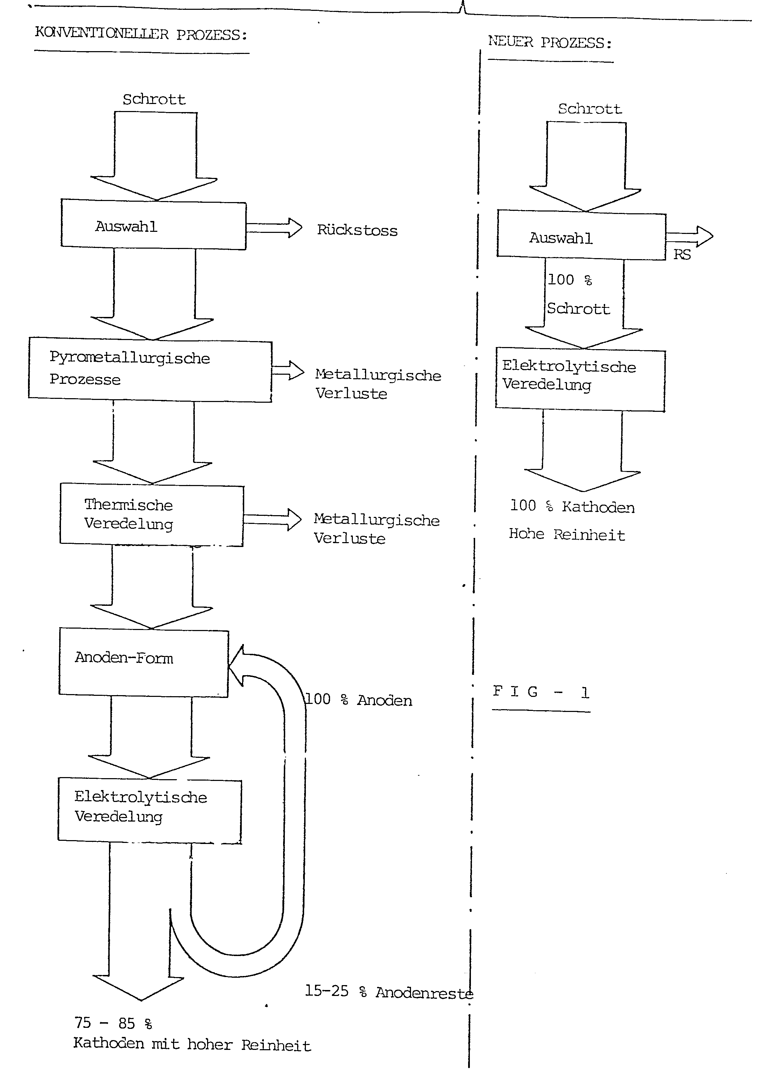

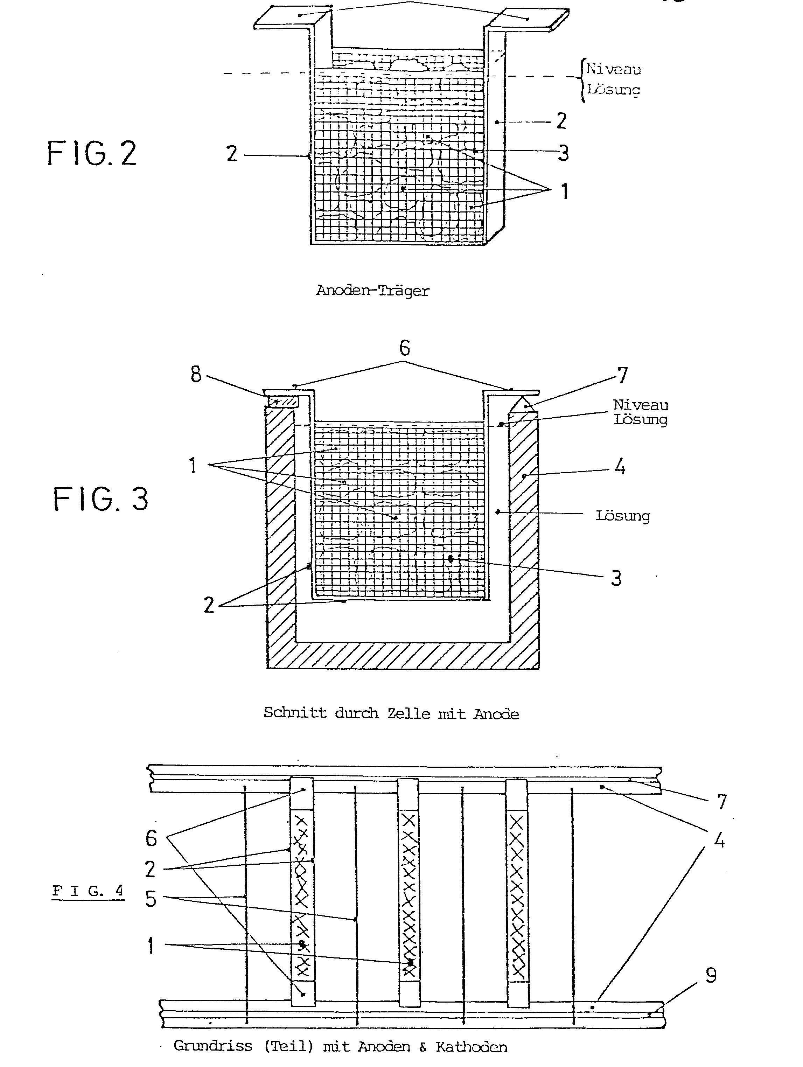

Die Zielrichtung und Vorteile dieser Erfindung können besser
verstanden werden, wenn Figur 1 und die folgende Beschreibung beigezogen werden; die letztere ist bloss als Beispiel
gedacht und soll keinesfalls die Erfindung unnötig einschränken, deren Bereich in den beiliegenden une entsprechenden Forderungen definiert ist.

Der grundsätzliche Unterschied zwischen dem konventionellen
Prozess zur Veredelung von Ausschuss-Material - bei sich ablösenden pyrometallurgischen und elektrolytischen Methoden,
und dem neuen System gemäss vorliegender Erfindung, - liegt
darin, dass das letztere alle pyrometallurgischen Abschnitte
ausschaltet und die Verwendung des Anoden-Materials im elektrolytischen Veredelungs-Prozess verbessert.

- Die Ausschaltung der pyrometallurgischen Schritte gründet
auf der Gegebenheit, dass es im neuen Prozess überflüssig
ist, das Ausschuss-Material zu schmelzen um feste gegessene
Anoden zu erhalten - vielmehr kann das genannte Ausschuss-
Material direkt der Elektrolyse unterworfen werden, während
es in geeigneten leitfähigen, unlöslichen Anoden-Trägern
plaziert ist.

- Die Verbesserung der Nutzung des sekundären Anoden-
Materials gründet darauf, dass seine Auflösung während der
Elektro-Veredelung vollständig ist, da das ganze Ausschuss-
Material elektrolytisch verarbeitet wird, und zwar ohne
Schaffung von "Anoden-Rückständen" welch letztere in der
konventionellen elektrolytischen Veredelung mit gegossenen

Anoden unvermeidlich sind. Da das Material im Anoden-Träger-System sich auflöst, kann es kontinuierlich oder periodisch wieder aufgefüllt werden, ohne dabei den elektro-Veredelungs-Prozess wegen des Rückzuges und des Ersatzes der Anoden - wie dies beim konventionellen Prozess der Fall ist - unterbrechen zu müssen.

Die Vorteile der direkten elektro-Veredelung von Ausschuss-Material - wie es der Gegenstand vorliegender Erfindung ist - gegenüber dem konventionellen System mit sich ablösenden pyrometallurgischen und elektrolytischen Vorgängen, sind im wesentlichen die folgenden:

- Die teuren Haupt- und Hilfseinrichtungen für die pyrometallurgischen Vorgänge zwecks Beschaffung von geschmolzenem Ausschuss-Materials für den Anoden-Guss sind überflüssig.

- Einsparung von Brennstoff-Kosten, Wegfall von Spezialisten, Einsparung von elektrischer Energie im Zusammenhang mit der Schmelzung & der Handhabung des Ausschuss-Materials.

- Die metallurgischen Verluste, die mit pyrometallurgischen Vorgängen einhergehen, sind ausgeschaltet.

- Eine Giesserei für den Guss der Anoden aus dem geschmolzenen Ausschuss-Material ist überflüssig; somit Einsparungen in Installationen, Ausrüstung & teuren Formen, und in zugehörigen Spezial-Arbeitern.

- Alle für pyrometallurgische Prozesse normalerweise benötigten Hilfs-Stoffe sind eliminiert.

- Die Unterhalts- und Reparatur-Kosten für die pyrometallurgische Anlage sind vollständig eliminiert: solche Kosten treten sehr häufig bei der Veredelung von Ausschuss-Material auf.

- Der Veredelungs-Prozess wird kürzer: das fängt bei der Auswahl des Ausschuss-Materials an und endet beim Ausstoss von elektrolytischen Kathoden hoher Reinheit; das bedeutet eine Verminderung des totalen Inventars von Ausschuss-Material für die ganze Veredelungs-Operation. Dieser Faktor hat grosse Bedeutung für die Endkosten der Veredelung.

0072883

- Durch die Ausschaltung der pyrometallurgischen Stufen wird die Gefahr einer zugehörigen Umwelt-Belastung vermieden.

- Weitere Einsparungen in elektrischer Energie, Arbeitskräften & Brennstoffen werden dadurch erzielt, indem der Rückzug, die Wäsche, der Transport, die Schmelzung, der Neu-Guss der "Anoden-Rückstände" im konventionellen elektrolytischen Veredelungs-Prozess eliminiert sind.

- Der neue Prozess der elektrolytischen Veredelung - welcher der Gegenstand dieser Erfindung ist - ist der konventionellen elektrolytischen Veredelung ähnlich, allerdings mit dem grundlegenden Unterschied, dass die gegossenen Anoden (des konventionellen Prozesses) im neuen Prozess durch Anoden-Träger, welche das Ausschuss-Material enthalten, ersetzt sind.

- Das zu veredelnde Nicht-Eisen Ausschuss-Material wird in Anoden-Trägern untergebracht; die Eigenschaften der Träger werden nachfolgend beschrieben.

- Installation oder Montage: in konventionellen elektrolytischen Zellen; die Anoden-Träger enthalten das Nicht-Eisen Schrott-Material und werden mit Kathoden eingeschaltet, die ursprünglich aus sehr dünnen Platten des gleichen Nicht-Eisen-Metalls gemacht sind, und zwar von elektrolytischer Qualität, oder aus einem anderen geeigneten Metall.

- Der elektrolytische Veredelungs-Prozess findet nun unter konventionellen Betriebsbedingungen statt; das Schrott-Material in den Anoden-Trägern löst sich im Elektrolyten anodisch, und das gleiche Metall wird an den Kathoden in hoher elektrolytischer Reinheit abgesetzt.

- Die Anoden-Träger werden mit Schrott wieder geladen, um das während der Elektrolyse gelöste Material zu ersetzen; und die Kathoden mit der Metallablage von hoher Reinheit werden durch frische Start-Kathoden ausgewechselt.

- Fortsetzung des elektrolytischen Veredelungs-Prozesses wie bereits beschrieben.

Ein grundsätzliches Erfordernis für den Anoden-Träger 0072883
den Nicht-Eisen-Schrott enthält besteht darin, dass dieser
notwendigerweise aus leitendem Material besteht welches im
verwendeten Elektrolyten unter der angewendeten Elektro-
Veredelung unlösbar bleibt.

Guter elektrischer Kontakt zwischen dem Anoden-Träger und
dem darin enthaltenen Schrott ist ebenso ein wesentliches
Erfordernis.

Das Material für die Herstellung des Anoden-Trägers soll
gute elektrische Leitfähigkeit haben, soll genügend mechanische
Festigkeit haben und muss die Fähigkeit zur maschinellen
Bearbeitung haben.

Als geeignete Materialien können im Sinne von Beispielen
erwähnt werden: gewisse rostfreie Stahle, Blei,
Titanium, und irgend ein anderes Material welches die
oben genannten Bedingungen erfüllt.

In der Herstellung der Anoden-Träger können in Verbindung
mit leitenden Materialien auch nicht-leitende Materialien
verwendet werden, vorausgesetzt allerdings dass diese
im Elektrolyten im Veredelungs-Prozess ebensowenig lösbar
sind.-Auf jeden Fall soll mindestens eine der Stirnseiten,
Wände oder Elemente des Anoden-Trägers aus leitendem
unlöslichem Material hergestellt sein, damit ein
genügender elektrischer Kontakt zwischen dem Abfall-Material
und der äussern Stromquelle hergestellt ist.

Der Anoden-Träger soll eine geeignete Form zum Fassen
des Nicht-Eisen Schrottes haben, der gelöst werden soll;
eine oder alle seine Stirnseiten sollen perforiert sein,
damit das Nicht-Eisen Material vollständig oder teilweise
im verwendeten Elektrolyten eingetaucht ist, und damit
der Anoden-Schlamm, der während des Prozesses entsteht,
auf den Grund der elektrolytischen Zelle fallen kann.

Vorzugsweise hält man sich, was Grösse und Form des
Anoden-Träger-Systems anbetrifft, an das konventionelle
System der gegossenen Anode, damit die Dimensionen der
elektrolytischen Zellen und das Volumen des Elektrolyten
der herkömmlichen industriellen Technologie der Elektro-
Veredelung entsprechen.

Als sehr geeignete Form für den Anoden-Träger kann
ein Rahmen , eine Art Käfig oder Korb mit rechtwinkligem
Querschnitt gelten, oben offen , und mit Stirnseiten aus
Gitterwerk , aus gedehntem Material, Stangen, perforierter
Tafel, oder aus anderer in der Industrie konventionellen
Art. Dessenungeachtet, kann für den Anoden-Träger irgendeine geeignete Form gewählt werden, welche die oben erwähnten
Anforderungen inbezug auf Fassung des Schrotts und dessen
anodischen Lösung und Kontakthaltung mit dem Elektrolyten
gewährleistet.

Die elektrolytischen Zellen, die Systeme für den elektrischen
Kontakt der Elektroden, die Bewegung der Lösung , und im
allgemeinen die betrieblichen Hilfsoperationen des Elektro-
Veredelungsprozesses, können jene in der Industrie konventionellen sein. Ebenso die betrieblichen Bedingungen des
elektrolytischen Prozesses, wie die Stromdichte auf den
Elektroden , die Temperatur, das Rühren, die Natur und
Konzentration des Elektrolyten. -

Die Systeme der Anoden-Träger arbeiten vorzugsweise statisch,
wie im Falle der konventionellen Guss-Anoden.Sie können
allerdings auch in Bewegung arbeiten, horizontal Hin-und-
Her, vertikal, in pendelnder oder schaukelnder Bewegung,
oder in Drehbewegung mit Teil- oder Ganz-Umdrehungen,
und zwar mittels der in der Industrie bekannten konventionellen
Methoden.

Die Anoden-Träger Systeme können eine geeignete konventionelle
Membrane auf oder integriert den Stirnseiten tragen;
diese Membrane soll Partikel zurückhalten, die im
Elektrolyten unlöslich sind. In einem solchen Fall,
müsste die Membrane vorzugsweise so angebracht sein, dass
leichtes Entfernen und Auswechseln gewährleistet sind.

Die Anoden-Träger können auf- oder eingebaute Elemente
tragen, zum Einblasen von Luft oder anderm Gas, falls
eine Bewegung des Elektrolyten in der Nähe oder im Innern
des Anoden-Trägers gewünscht wird.

Die Anoden-Träger Systeme können mit oder ohne Fluss des Elektrolyten, und zwar in ihr inneres oder daraus heraus – kontinuierlich oder nicht kontinuierlich – angewendet werden.

Der nicht-Eisen-Schrott, der im Anoden-Träger enthalten ist, kann in verschiedenen Formen und Grössen verarbeitet werden ; im folgenden sind einige davon als blosses Beispiel genannt, ohne irgendwelche Begrenzung der Erfindung: Bruchstücke, Briketts von verschiedenem Dichtegrad, Schnitzel, Körner, Puder, oder irgend eine andere Form , die eine Beladung der Anoden-Träger zulässt.

Das Beladen der Anoden-Träger mit dem Nicht-Eisen-Schrott kann durchgehend, periodisch, individuell oder kollektiv, von Hand, halb-automatisch oder automatisch, unter vorgängigem Rückzug des Anoden-Trägers aus der elektrolytischen Zelle oder unter Belassen dieses in der Zelle, mit oder ohne Durchgang von elektrischem Strom während der Operation, – vor sich gehen.

Das Beladen der Anoden-Träger mit dem Nicht-Eisen-Schrott kann, aber muss nicht, zusammenfallen mit dem periodischen Rückzug, sprich "Ernte" der Kathoden mit dem verfeinerten Metall aus den elektrolytischen Zellen.

Das Anoden-Träger System mit dem Nicht-Eisen Material kann periodisch gewaschen werden, um die Elimination von Rückständen aus Anoden-Schleim zu fördern.

PATENTANSPRUECHE

1. Ein verbesserter Prozess für die Veredelung von Ausschuss- Material , Schrott oder Abfall-Material, alles aus Nicht-Eisen-Metallen; dabei wird das Ausschuss-Material direkt einer elektrolytischen Veredelung unterworfen gemäss den folgenden Stufen:

(a) Das Ausschuss-Material aus Nicht-Eisen-Metallen, welches veredelt werden soll, wird in der Form von Bruchstücken, Briketts, Schnitzeln, Körnern, oder Puder, in ein leitendes Anoden-Träger-System eingefüllt ; das letztere System ist im verwendeten Elektrolyten unlöslich und hat die wesentliche Funktion, das Ausschussmaterial mit dem Elektrolyten in Kontakt zu halten und den geeigneten elektrischen Kontakt zwischen dem Ausschussmaterial und der äussern Strom-Quelle zu gewöhrleisten.

(b) Die Anoden-Träger-Systeme, welche das Ausschuss-Material enthalten, werden in konventionellen elektrolytischen Zellen installiert oder montiert.

(c) Der elektrolytische Veredelungs-Prozess wird unter konventionellen Betriebsbedingungen ausgeführt, wobei das in den Anoden-Trägern enthaltene Ausschussmaterial anodisch aufgelöst wird und dasselbe Metall an den Kathoden in einer Qualität von hoher Reinheit abgelagert wird.

(d) Rückzug der Anoden-Träger aus den elektrolytischen Zellen ; Beladung der Anoden-Träger mit Ausschuss-Material um dasjenige Material zu ersetzen, welches während der Elektrolyse gelöst wurde; Rückzug der Kathoden mit der Ablage des Metalls von hoher Reinheit.

(e) Wiederaufnahme des elektrolytischen Prozesses gemöss 1 - (b)

2. Einen Prozess gemöss Anspruch 1; dabei wird das Anoden-Träger-System während der elektrolytischen Veredelung bewegt und zwar mittels irgend einer Methode der horizontalen, vertikalen, pendelnden, oder schaukelnden Hin- und Her-Bewegungen , kontinuierlich oder nicht kontinuierlich .

3. Einen Prozess gemäss Anspruch 2 ; dabei wird das Anoden-Träger-System mittels irgend einer konventionellen Methode teilweise oder vollständig gedreht, und zwar kontinuierlich oder nicht kontinuierlich.

4. Einen Prozess gemäss Anspruch 1; dabei wird der Elektrolyt innerhalb oder in der Nähe des Anoden-Träger-Systems durch eingeblasene Luft oder eine andere Art Gas bewegt, und zwar mittels irgend einer konventionellen Methode, kontinuierlich oder nicht kontinuierlich .

5. Einen Prozess gemäss Anspruch 1; dabei ermöglicht das Anoden-Träger-System die Zirkulation des Elektrolyten , und zwar in sein Inneres oder heraus - kontinuierlich oder nicht kontinuierlich .

6. Einen Prozess gemäss Anspruch 1 ; dabei werden im Anoden-Träger-System Partikel, die im Elektrolyten unlöslich sind, durch die Einbeziehung oder die Unterstützung von konventionellen Membranen zurückgehalten.

7. Einen Prozess gemäss Anspruch 1 ; dabei wird das Anoden-Träger-System mit Ausschuss-Material wieder gefüllt ohne dessen Rückzug aus der Elektrolytischen Zelle , und zwar individuell oder kollektiv, periodisch oder durchgehend.

KONVENTIONELLER PROZESS:

NEUER PROZESS:

Schrott

Schrott

Auswahl → Rückstoss

Auswahl → RS

Pyrometallurgische Prozesse → Metallurgische Verluste

100 %

Schrott

Elektrolytische Veredelung

Thermische Veredelung → Metallurgische Verluste

100 % Kathoden

Hohe Reinheit

Anoden-Form

100 % Anoden

F I G - 1

Elektrolytische Veredelung

15-25 % Anodenreste

75 - 85 %
Kathoden mit hoher Reinheit

**FIG. 2**

Niveau
Lösung

2

2

3

1

Anoden-Träger

**FIG. 3**

6

8

7

Niveau
Lösung

1

4

Lösung

2

3

Schnitt durch Zelle mit Anode

**F I G. 4**

6

2

5

1

7

4

9

Grundriss (Teil) mit Anoden & Kathoden

Europäisches
Patentamt

EUROPÄISCHER RECHERCHENBERICHT

0072883

Nummer der Anmeldung

EP 81810342.6

| Kategorie | Kennzeichnung des Dokuments mit Angabe, soweit erforderlich der maßgeblichen Teile | betrifft Anspruch | KLASSIFIKATION DER ANMELDUNG (Int. Cl.³) |
|---|---|---|---|
| | **EINSCHLÄGIGE DOKUMENTE** | | |
| X | DE - B - 1 221 452 (NORDDEUTSCHE AFFINERIE) <br><br> * Spalte 1, Zeilen 3-6,9,10, 16-19, 34-45; Patentanspruch 1; Abbildung 1 * <br><br> -- | 1 | C 25 C 1/00 |
| X | DE - B - 1 205 290 (NORDDEUTSCHE AFFINERIE) <br><br> * Spalte 1, Zeilen 23-33; Patentansprüche 1-3 * <br><br> -- | 1,5,7 | |
| X | US - A - 4 207 153 (FLOOD) <br><br> * Spalte 2, Zeilen 22-39; Fig. 4,5; Spalte 4, Zeilen 1-35; Spalte 5, Zeilen 54-61; Fig. 6; Spalte 3, Zeile 55 * <br><br> -- | 1,4-7 | **RECHERCHIERTE SACHGEBIETE (Int. Cl.³)** <br><br> C 25 C <br> C 25 D 17/00 |
| X | US - A - 3 957 600 (IVES) <br><br> * Fig. 3; Spalte 4, Zeilen 47-61 * <br><br> -- | 1,6,7 | |
| X | US - A - 4 085 026 (HALFORD) <br><br> * Fig. 1; Spalte 2, Zeilen 12-16 * <br><br> -- | 1 | |
| X | DE - A1 - 2 737 051 (CITIES SERVICE) <br><br> * Fig. 1; Seite 10, Zeilen 8-12; Seite 11, Zeilen 22, 23 * <br><br> ---- | 1 | |

| | | | |
|---|---|---|---|
| X | Der vorliegende Recherchenbericht wurde für alle Patentansprüche erstellt. | | |
| **Recherchenort** <br> WIEN | **Abschlußdatum der Recherche** <br> 11-08-1982 | **Prüfer** <br> ONDER | |

EPA form 1503.1  06.78